# EUROPÄISCHE PATENTSCHRIFT

(11) **EP 2 049 356 B1**
(45) Veröffentlichungstag und Bekanntmachung des Hinweises auf die Patenterteilung: **27.01.2010**
(21) Anmeldenummer: 07788109.2
(22) Anmeldetag: 01.08.2007
(51) Int. Cl.: B60L 7/06, H02P 3/22, H02P 5/747

(54) **DIESELELEKTRISCHES ANTRIEBSSYSTEM**
DIESEL-ELECTRIC DRIVE SYSTEM
SYSTEME D'ENTRAINEMENT DIESEL-ELECTRIQUE

(30) Priorität: 08.08.2006 DE 102006037064; 22.01.2007 DE 102007003172
(43) Veröffentlichungstag der Anmeldung: 22.04.2009
(73) Patentinhaber: SIEMENS AKTIENGESELLSCHAFT, 80333 München (DE)
(72) Erfinder: AMLER, Gerald, 90475 Nürnberg (DE)
(86) Internationale Anmeldenummer: PCT/EP2007/057938
(87) Internationale Veröffentlichungsnummer: WO 2008/017629

(56) Entgegenhaltungen:
- DE-A1- 10 210 164
- US-A- 5 099 186
- US-A1- 2005 242 758
- KOERNER O ET AL: "Energy Efficient Drive System for a Diesel Electric Shunting Locomotive" POWER ELECTRONICS AND APPLICATIONS, 2005 EUROPEAN CONFERENCE ON DRESDEN, GERMANY 11-14 SEPT. 2005, PISCATAWAY, NJ, USA,IEEE, 11. September 2005 (2005-09-11), Seiten P.1-P.10, XP010933721 ISBN: 978-90-75815-09-2 in der Anmeldung erwähnt

## Beschreibung

### Dieselelektrisches Antriebssystem

Die Erfindung bezieht sich auf ein dieselelektrisches Antriebssystem gemäß dem Oberbegriff des Anspruchs 1.

Ein gattungsgemäßes Antriebssystem ist der Veröffentlichung mit dem Titel "Energy Efficient Drive System for a Diesel Electric Shunting Locomotive", von Olaf Koerner, Jens Brand und Karsten Rechenberg, abgedruckt im Konferenzband "EPE'2005", der EPE-Konferenz in Dresden vom 11.-14.09.2005 zu entnehmen. In dieser Veröffentlichung werden zwei dieselelektrische Antriebssysteme mit einem permanent erregten Synchrongenerator einander gegenüber gestellt. Diese beiden Antriebssysteme unterscheiden sich nur darin, dass der generatorseitige Stromrichter des Spannungszwischen-kreis-Umrichters einmal ein Diodengleichrichter und das andere Mal ein selbstgeführter Pulsstromrichter ist. In dieser Veröffentlichung wird der selbstgeführte Pulsstromrichter als IGBT-Gleichrichter bezeichnet. Bei beiden Antriebssystemen ist ein Bremswiderstand mit dem Zwischenkreis des Spannungszwischenkreis-Umrichters verbindbar. Dazu ist ein abschaltbarer Thyristor vorgesehen, der auch als Gate Turn Off-Thyristor (GTO-Thyristor) bezeichnet wird. Mittels diesem Pulswiderstand wird die Gleichspannung im Zwischenkreis des Spannungszwischenkreis-Umrichters im Bremsbetrieb, das heißt, die Last, insbesondere eine Drehfeldmaschine, liefert Energie in den Zwischenkreis, dafür gesorgt, dass eine maximal zulässige Zwischenkreis-Spannung nicht überschritten wird. Ein Teil dieser Bremsleistung kann auch dazu verwendet werden, das Schleppmoment des leer laufenden Dieselmotors auszugleichen. Nachteilig wirkt sich aus, dass für den Bremssteller ein weiterer Stromrichter-Brückenzweig verwendet werden muss und die zusätzliche Verschienung dieses Bremsstellers mit der Zwischenkreis-Verschienung erfolgen muss. In Abhängigkeit der Bremsleistung kann es vorkommen, dass weitere Stromrichter-Brückenzweige für den Bremssteller verwendet werden müssen. Außerdem wird eine Steuervorrichtung für den Bremssteller benötigt.

Aus der DE 102 10 164 A1 ist eine Vorrichtung zur mehrfachen Gleichrichtereinspeisung eines permanent erregten Synchronmotors in einer Kraftanlage bekannt. Dieser permanent erregte Synchrongenerator weist zwei mehrphasige Ständerwicklungssysteme auf, die in ihrer Windungszahl unterschiedlich ausgeführt sind. Das eine Wicklungssystem ist an einem gesteuerten Gleichrichter, z.B. einem IGBT-Gleichrichter, angeschlossen. Dieser gesteuerte Gleichrichter hat die Aufgabe, den permanent erregten Synchrongenerator bezüglich Leistungsabgabe und somit Drehzahl zu regeln. Dazu fließt im Bereich kleiner Drehzahlen Strom und somit die elektrische Leistung ausschließlich über dieses Wicklungssystem und damit über den gesteuerten Gleichrichter, der an einem Gleichspannungszwischenkreis angeschlossen ist. Das zweite Wicklungssystem ist an einem ungesteuerten Gleichrichter, beispielsweise einer mehrpulsigen Diodenbrücke, angeschlossen, der ebenfalls an den gleichen Gleichspannungszwischenkreis wie der gesteuerte Gleichrichter angeschlossen ist. Ist die verkettete (d.h. Phase zu Phase) Rotationsspannung (auch als Polradspannung bezeichnet) größer als die Zwischenkreisspannung des Gleichspannungszwischenkreises, kann im zweiten Wicklungssystem ein Strom fließen, der über den ungesteuerten Gleichrichter auf den Gleichspannungszwischenkreis gleichgerichtet wird. Dabei kann durch die magnetische Kopplung zwischen dem ersten und zweiten Wicklungssystem der Strom im zweiten Wicklungssystem durch den Strom im ersten Wicklungssystem, der durch den aktiven Gleichrichter (gesteuerter Gleichrichter) geregelt wird, in Amplitude und Phasenlage beeinflusst werden. Dies bedeutet, dass mit Hilfe des gesteuerten Gleichrichters auch der Strom in dem Wicklungssystem des ungesteuerten Gleichrichters zu einem gewissen Grad geregelt werden kann. Die Wirkleistungsübertragung dieser Vorrichtung wird hauptsächlich vom ungesteuerten Gleichrichter übernommen, damit der gesteuerte Gleichrichter in seiner Leistung klein dimensioniert und damit kostengünstig wird. Mit Hilfe dieses gesteuerten Gleichrichters, der allgemein auch als selbstgeführter Pulsstromrichter bezeichnet wird, wird der stark übererregte Betrieb des permanent erregten Synchrongenerators vermieden. Außerdem werden Harmonische im Generatormoment, die durch den ungesteuerten Gleichrichter verursacht werden, kompensiert.

Bei dieselelektrischen Traktionsantrieben, beispielsweise Diesellokomotiven oder Mining Trucks, dient der an diesem Motor angebrachte Generator dazu, Energie für den Antrieb zu liefern. Die elektrische Spannung des Generators wird durch die Dioden-Gleichrichter oder den IGBT-Gleichrichter auf eine konstante Zwischenkreisspannung gebracht, aus der der lastseitige selbstgeführte Pulsstromrichter der Antriebsmotoren versorgt wird. Beim elektrischen Bremsen ist der Leistungsfluss im Spannungszwischenkreis-Umrichter genau umgekehrt. Die Energie wird durch den lastseitigen selbstgeführten Pulsstromrichter in den Spannungs-Zwischenkreis des Spannungszwischenkreis-Umrichters geliefert. Da der Dieselmotor keine Bremsleistung aufnehmen kann, muss die Bremsenergie mittels eines Bremswiderstandes in Wärme umgewandelt werden. Für eine kontinuierliche Leistungsverstellung wird eine durch einen Bremssteller pulsweitenmodulierte Spannung auf den Bremswiderstand gegeben.

Nachteilig an dieser Vorgehensweise ist, dass im Bremsbetrieb der Gleichrichter (Dioden- bzw. IGBT-Gleichrichter) ungenutzt bleibt, während im Fahrbetrieb der Bremssteller nicht genutzt werden kann. Damit sind im Umrichter mehr Leistungshalbleiter installiert, als notwendig.

Das Problem besteht nun darin, eine Lösung bzw. eine Schaltung zu finden, bei der die Leistungshalbleiter sowohl im Fahr- als auch im Bremsbetrieb genutzt werden können, ohne dabei die Topologie mittels Leistungsschalter umzukonfigurieren.

Die Erfindung geht von der Erkenntnis aus, dass gerade bei hohen Leistungen es nicht auf die Anzahl der Leistungshalbleiter ankommt, sondern auf deren installierten Leistung oder Chipfläche. Gerade bei hohen Leistungen werden die Leistungshalbleiter parallel geschaltet.

Der Erfindung liegt nun die Aufgabe zugrunde, das gattungsgemäße dieselelektrische Antriebssystem dahingehend zu verbessern, dass auf einen zusätzlichen Bremssteller verzichtet werden kann.

Diese Aufgabe wird erfindungsgemäß mit den kennzeichnenden Merkmalen des Anspruchs 1 in Verbindung mit den Merkmalen seines Oberbegriffs gelöst.

Dadurch, dass ein zweiter generatorseitiger selbstgeführter Pulsstromrichter vorgesehen wird, teilt sich die Leistung des generatorseitigen selbstgeführten Pulsstromrichters eines gattungsgemäßen dieselelektrischen Antriebssystems auf diese beiden generatorseitigen selbstgeführten Pulsstromrichter auf. Vorausgesetzt ist ein Generator, der an Stelle eines Wicklungssystems im Ständer nun zwei mehrphasige Wicklungssysteme aufweist. Dadurch erhält man einen weiteren Freiheitsgrad, der für die Anschaltung der Bremswiderstände benutzt werden kann. Erfindungsgemäß verbindet ein Bremswiderstand wenigstens eine Eingangsphase des einen generatorseitigen selbstgeführten Pulsstromrichters mit einer korrespondierenden Eingangsphase des zweiten generatorseitigen selbstgeführten Pulsstromrichters des Spannungszwischenkreis-Umrichters.

Durch diese erfindungsgemäße Weiterbehandlung des gattungsgemäßen dieselelektrischen Antriebssystems kann vollständig auf einen Bremssteller im Zwischenkreis des Spannungszwischenkreis-Umrichters verzichtet werden. Das heißt, die installierte Leistung bzw. die Chipfläche des erfindungsgemäßen Spannungszwischenkreis-Umrichters hat sich gegenüber dem gattungsgemäßen Zwischenkreis-Umrichter verringert, wobei die Leistungsabgabe unverändert ist.

Bei einer weiteren Ausführungsform des dieselelektrischen Antriebssystems nach der Erfindung sind die herausgeführten Sternpunkte der beiden mehrphasigen Wicklungssysteme des Generators mittels eines Bremswiderstandes miteinander elektrisch leitend verbunden. Diese weitere Ausführungsform weist gegenüber der ersten Ausführungsform dieselben Vorteile auf.

Will man eine höhere Bremswirkung erzielen, so ist jede Eingangsphase des ersten generatorseitigen selbstgeführten Pulsstromrichters mittels eines Bremswiderstandes mit einer korrespondierenden Eingangsphase des zweiten generatorseitigen selbstgeführten Pulsstromrichters elektrisch leitend verbunden.

Weitere vorteilhafte Ausführungsformen des dieselelektrischen Antriebssystems nach der Erfindung sind den Unteransprüchen 3 bis 6 zu entnehmen.

Im Fahrbetrieb werden die beiden generatorseitigen selbstgeführten Pulsstromrichter des erfindungsgemäßen dieselelektrischen Antriebssystems gleichphasig getaktet. Dadurch sind die Differenzspannungen über den Bremswiderständen Null, wodurch keine Leistung in den Bremswiderständen umgesetzt werden kann. Die Schaltung wirkt somit wie ein konventionelles Generatorsystem mit einer Wicklung und einem dreiphasigen Pulsstromrichter.

Im Bremsbetrieb werden die beiden generatorseitigen selbstgeführten Pulsstromrichter des erfindungsgemäßen dieselelektrischen Antriebssystems derart gesteuert, dass ein Spannungs-Nullsystem erzeugt wird. Ein derartiges Spannungs-Nullsystem wird dadurch erzeugt, dass entweder die Phase eines Taktsignals oder ein Taktverhältnis verschoben wird. Dadurch ergibt sich eine zeitliche Verschiebung des Potentials einer Eingangsphase des einen generatorseitigen selbstgeführten Pulsstromrichters zu einer korrespondierenden Eingangsphase des anderen generatorseitigen selbstgeführten Pulsstromrichters des Umrichters des dieselelektrischen Antriebssystems nach der Erfindung. Dadurch fällt am korrespondierenden Bremswiderstand eine Spannung ab. Abhängig vom zeitlichen Wert der Verschiebung wird die Leistung bestimmt, die in den Bremswiderständen umgesetzt wird. Das heißt, für eine vorbestimmte Bremsleistung muss die Phasenverschiebung bzw. die Verschiebung des Taktverhältnisses einen vorbestimmten Wert einnehmen.

Durch die Phasenverschiebung der Taktsignale bzw. durch die Verschiebung des Taktverhältnisses bleibt der Mittelwert einer Spannung über eine Pulsperiode in korrespondierenden Eingangsspannungen der beiden generatorseitigen selbstgeführten Pulsstromrichter des Umrichters des dieselelektrischen Antriebssystems gleich. Somit ist der Generatorstrom bzw. dessen Drehmoment weiterhin unabhängig regelbar, aber gleichzeitig kann mittels der Phasenverschiebung bzw. der Verschiebung des Taktverhältnisses eine überschüssige Energie (Bremsenergie) mittels der Bremswiderstände in Wärme umgewandelt werden.

Zur weiteren Erläuterung der Erfindung wird auf die Zeichnung Bezug genommen, in der eine Ausführungsform eines erfindungsgemäßen dieselelektrischen Antriebssystems schematisch veranschaulicht ist.
- FIG 1: zeigt ein Ersatzschaltbild eines gattungsgemäßen dieselelektrischen Antriebssystems; in der
- FIG 2: ist ein Ersatzschaltbild eines weiteren bekannten dieselelektrischen Antriebssystems dargestellt; die
- FIG 3: zeigt ein Ersatzschaltbild einer vorteilhaften Aus- führungsform einer ersten Ausführungsform eines Spannungszwischenkreis-Umrichters eines diesel- elektrischen Antriebssystems nach der Erfindung, in der
- FIG 4: sind Taktsignale und Eingangsphasenspannungen zwei- er korrespondierender Phasen der beiden generator- seitigen selbstgeführten Pulsstromrichter des Um- richters gemäß FIG 3 in einem Diagramm über der Zeit veranschaulicht, die
- FIG 5: zeigt ein Ersatzschaltbild einer vereinfachten Aus- führung der ersten Ausführungsform des dieselelekt- rischen Antriebssystems der Erfindung nach der Er- findung und in der
- FIG 6: ist ein Ersatzschaltbild einer zweiten Ausführungs- form des dieselelektrischen Antriebssystems nach der Erfindung dargestellt.

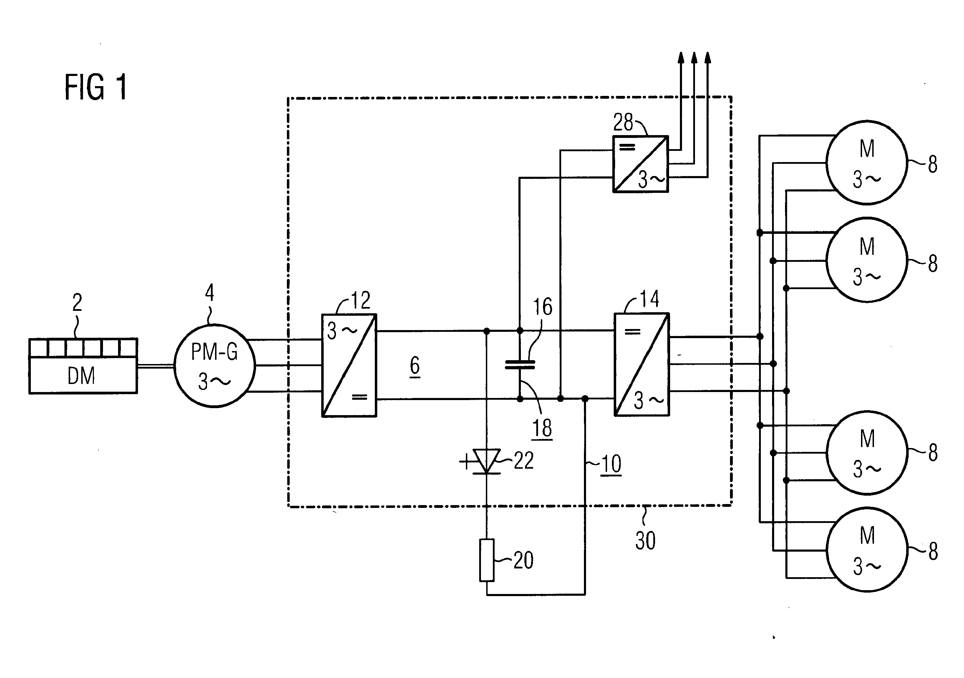

In der Figur 1, die ein Ersatzschaltbild eines gättungsgemäßen dieselelektrischen Antriebssystems zeigt, sind mit 2 ein Dieselmotor, mit 4 ist ein Generator, insbesondere ein permanent erregter Synchrongenerator, mit 6 ein Spannungszwischenkreis-Umrichter, mit 8 mehrere Drehfeldmaschinen, insbesondere Drehstrom-Asynchronmotoren, und mit 10 einen Bremschopper versehen. Der Spannungszwischenkreis-Umrichter weist einen generator- und lastseitigen selbstgeführten Pulsstromrichter 12 und 14 auf, die mittels eines eine Zwischenkreis-Kondensatorbatterie 16 aufweisenden Zwischenkreises 18 gleichspannungsseitig miteinander elektrisch leitend verbunden sind. Elektrisch parallel zu diesem Zwischenkreis 18 ist der Bremschopper 10 geschaltet, der einen Bremswiderstand 20 und einen Bremssteller 22, beispielsweise einen abschaltbaren Thyristor, aufweist, die elektrisch in Reihe geschaltet sind. Außerdem ist ein Hilfsbetriebewechselrichter 28 dargestellt. An den wechselspannungsseitigen Anschlüssen des Hilfsbetriebewechselrichters 28 sind Hilfsantriebe angeschlossen, die hier nicht explizit dargestellt sind. Der Dieselmotor 2 und der permanent erregte Synchrongenerator 4 sind läuferseitig mechanisch miteinander gekoppelt, wobei dieser permanent erregte Synchrongenerator 4 ständerseitig mit wechselspannungsseitigen Anschlüssen des generatorseitigen selbstgeführten Pulsstromrichters 12 des Spannungszwischenkreis-Umrichters 6 verknüpft ist.

Da dieses Ersatzschaltbild ein Ersatzschaltbild einer dieselelektrischen Lokomotive ist, ist mit 30 ein Traktionscontainer bezeichnet, der die Stromrichterelektronik aufnimmt. Außerhalb dieses Traktionscontainers 30 sind der Bremswiderstand und der dieselangetriebene permanent erregte Synchrongenerator 4 angeordnet. Die vier Drehstrom-Asynchronmotoren 8 sind die Motoren der beiden Drehgestelle einer dieselelektrischen Lokomotive.

Der Bremswiderstand 20, der in diesem Ersatzschaltbild als ein Widerstand ausgeführt ist, kann auch aus in Reihe oder parallel geschalteten Widerständen aufgebaut sein. Der abschaltbare Thyristor 22 ist in der Realisierung ein Stromrichter-Brückenzweigmodul, bei dem an Stelle eines zweiten abschaltbaren Thyristors nur die zugehörige Freilaufdiode verwendet wird.

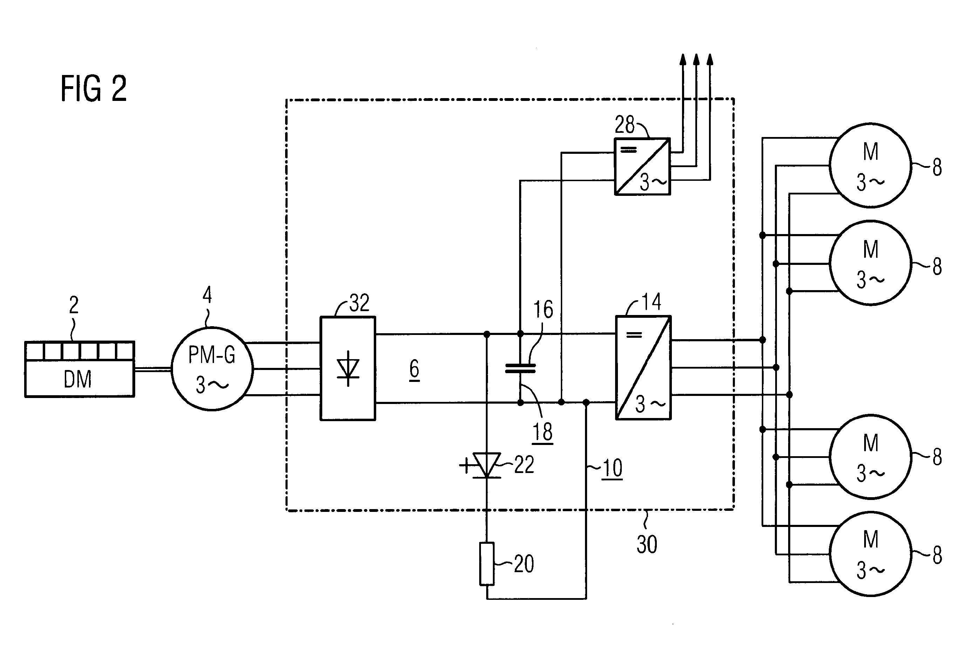

Die FIG 2 zeigt ebenfalls ein Ersatzschaltbild eines aus der eingangs genannten Veröffentlichung "EPE'2005, Dresden" bekannten dieselelektrischen Antriebssystems. Dieses Ersatzschaltbild unterscheidet sich vom Ersatzschaltbild gemäß FIG 1 dadurch, dass an Stelle eines generatorseitigen selbstgeführten Pulsstromrichters 12, der in dieser Veröffentlichung auch als IGBT-Gleichrichter bezeichnet wird, ein Dioden-Gleichrichter 32 vorgesehen ist. Diese Schaltung eines dieselelektrischen Antriebssystems ist gegenüber dem dieselelektrischen Antriebssystem gemäß FIG 1 weniger aufwendig, da für den generatorseitigen Stromrichter nur Dioden benötigt werden. Diese erfordern keine Ansteuereinrichtung wie die abschaltbaren Leistungshalbleiterschalter, insbesondere Insulated-Gate-Bipolar-Transistoren (IGBT), des IGBT-Gleichrichters der FIG 1. An Stelle des permanenterregten Synchrongenerators 4 im Ersatzschaltbild der FIG 1 bzw. 2 kann ebenfalls ein fremderregter Synchrongenerator oder auch ein Asynchrongenerator verwendet werden. Beim fremderregten Synchrongenerator ist zusätzlich eine Schaltungsanordnung für die Felderregung notwendig. Auch bei der Verwendung eines Asynchrongenerators ist eine zusätzliche Schaltungsanordnung notwendig, mit der im Asynchrongenerator ein Feld aufgebaut werden kann.

Ungeachtet dieser unterschiedlichen Ausführungsformen des dieselelektrischen Generators bleibt der Spannungszwischenkreis-Umrichter 6 unverändert. Das heißt, es wird immer ein Bremschopper 10 benötigt, um die Drehfeldmaschinen 8 elektrisch abbremsen zu können. Somit wird der Brückenzweig des Bremschoppers 10, eine Realisierung des dargestellten Bremsstellers 22, nur im Bremsbetrieb dieses dieselelektrischen Antriebssystems benötigt. Im Fahrbetrieb wird dieser Bremssteller nicht benutzt.

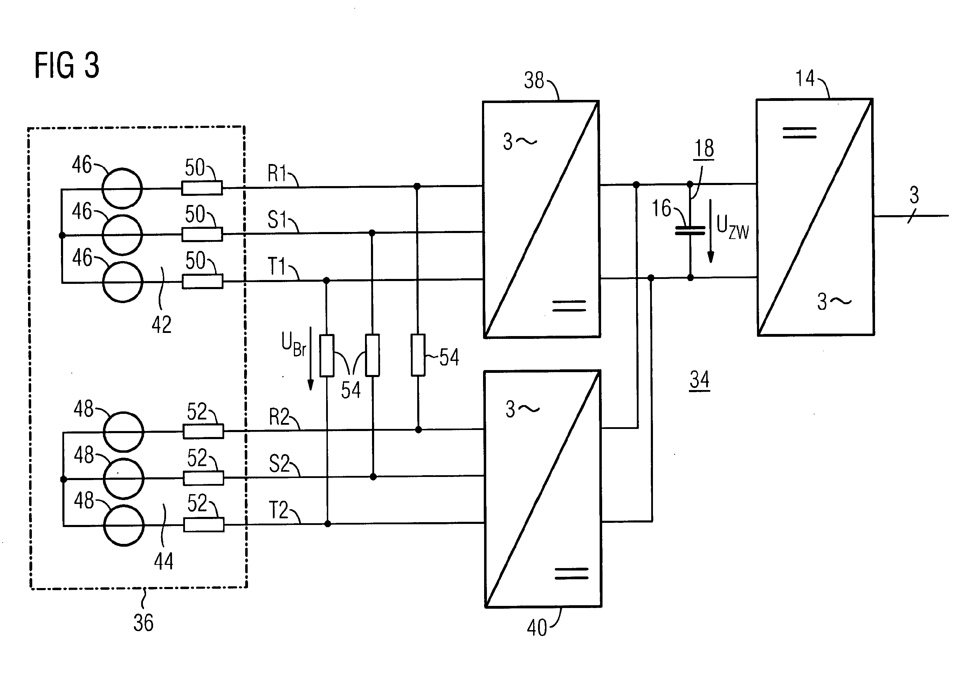

In der FIG 3 ist ein Ersatzschaltbild einer vorteilhaften Ausführungsform einer ersten Ausführungsform eines Spannungszwischenkreis-Umrichters 34 eines dieselelektrischen Antriebssystems nach der Erfindung schematisch dargestellt. In diesem Ersatzschaltbild ist ebenfalls ein Generator 36 des dieselelektrischen Antriebssystems als Ersatzschaltbild dargestellt. Dieser Spannungszwischenkreis-Umrichter 34 unterscheidet sich vom bekannten Spannungszwischenkreis-Umrichter 6 gemäß FIG 1 bzw. 2 dadurch, dass generatorseitig zwei selbstgeführte Pulsstromrichter 38 und 40 vorgesehen sind, die gleichspannungsseitig elektrisch parallel zur Zwischenkreis-Kondensatorbatterie 16 des Gleichspannungs-Zwischenkreises 18 geschaltet sind. Leistungsmäßig entsprechen diese beiden selbstgeführten Pulsstromrichter 38 und 40 der Leistung des selbstgeführten Pulsstromrichters 12 des Spannungszwischenkreis-Umrichters 6 der FIG 1. Das heißt, die installierte Leistung und damit die verwendete Chipfläche der Leistungshalbhalbleiterschalter der generatorseitigen Stromrichter ist unverändert.

Eingangsseitig ist der generatorseitige selbstgeführte Pulsstromrichter 38 bzw. 40 mit einem dreiphasigen Wicklungssystem 42 bzw. 44 des Generators 36 elektrisch leitend verbunden. Im Ersatzschaltbild sind von diesem Generator 36 mit zwei dreiphasigen Wicklungssystemen 42 und 44 jeweils pro Phase eine Spannungsquelle 46 bzw. 48 und eine Induktivität 50 bzw. 52 dargestellt. Mittels jeweils eines Widerstandes 54, insbesondere eines Bremswiderstandes 54, sind Ausgangsphasen R1, S1, T1 des ersten dreiphasigen Wicklungssystems 42 des Generators 36 mit korrespondierenden Ausgangsphasen R2, S2, T2 des zweiten dreiphasigen Wicklungssystems 44 des Generators 36 elektrisch leitend verbunden.

Mit dieser Schaltung des Spannungszwischenkreis-Umrichters 34 sind nun verschiedene Betriebsarten möglich:

### a) Fahrbetrieb:

Da die beiden dreiphasigen Wicklungssysteme 42 und 44 des Generators 36 die gleiche Spannung U₁, U₂ liefern, können die generatorseitigen selbstgeführten Pulsstromrichter 38 und 40 gleichphasig getaktet werden. Diese generatorseitigen selbstgeführten Pulsstromrichter 38 und 40 weisen für eine kontinuierliche Steuerung der Leistung einen Pulsweitenmodulator auf, der explizit in dieser Figur nicht dargestellt ist. Mittels eines derartigen Pulsweitenmodulators wird eine Sinus-Dreieck-Modulation bzw. eine Supersinus-Modulation bzw. Raumzeiger-Modulation durchgeführt. Bei einer Sinus-Dreieck-Modulation wird eine Sollspannung U*, auch als Referenz-SinusSpannung bezeichnet, mit einer hochfrequenten Dreieckspannung U_{D} verglichen. Am Ausgang eines derartigen Modulators stehen dann beispielsweise drei pulsweitenmodulierte Phasenspannungen U_{R,S,T} an. Werden die beiden generatorseitigen selbstgeführten Pulsstromrichter 38 und 40 im Fahrbetrieb gleichphasig getaktet, so entspricht dies, dass die beiden Dreieckspannungen U_{D1} und U_{D2} deckungsgleich sind. Mit der zur jederzeit gleichen Spannung U_{R1,S1,T1} und U_{R2,S2,T2} an den Eingängen der beiden generatorseitigen selbstgeführten Pulsstromrichter 38 und 40 bleibt eine Differenzspannung U_{Br} jeweils über einen Bremswiderstand 54 gleich Null. Damit geht keine Leistung in diesen Bremswiderständen 54 verloren. Die volle vom dieselelektrischen Generator 36 erzeugte Leistung wird ohne Verluste in die Zwischenkreis-Kondensatorbatterie 16 des Gleichspannungs-Zwischenkreises 18 des erfindungsgemäßen Spannungszwischenkreis-Umrichters 34 eingespeist.

### b) Bremsbetrieb I:

Wenn Leistung aus der Zwischenkreis-Kondensatorbatterie 16 des Gleichspannungs-Zwischenkreises 18 des Spannungszwischenkreis-Umrichters 34 verbraucht werden soll, kann mittels der generatorseitigen selbstgeführten Pulsstromrichter 38 und 40 im Generator 36 mit zwei dreiphasigen Wicklungssystemen 42 und 44 Drehmoment aufgebaut werden. Dadurch wird der Generator 36 beschleunigt. Diese Leistung kann insofern weitergegeben werden, da der Dieselmotor im Schleppbetrieb diese aufnehmen kann. Somit ist dieser Bremsbetrieb I **dadurch gekennzeichnet, dass** in die Zwischenkreis-Kondensatorbatterie 16 vom lastseitigen selbstgeführten Pulsstromrichter 14 rückgespeiste Energie zwischengespeichert wird und diese durch dieselmotorisches Bremsen abgebaut wird.

### c) Bremsbetrieb II:

Ist bei einer höher werdenden Bremsleistung ein Verbrauchen im Dieselmotor nicht weiter möglich, werden die vorhandenen Bremswiderstände 54 zur Vernichtung der Energie verwendet. Damit an den Widerständen 54 jeweils Energie in Wärme umgewandelt werden können, muss eine entsprechende Differenzspannung U_{Br} jeweils an einem Bremswiderstand 54 abfallen. Um eine derartige Differenzspannung U_{Br} erzeugen zu können werden die beiden generatorseitigen selbstgeführten Pulsstromrichter 38 und 40 derart gesteuert, dass ein Spannungs-Nullsystem entsteht. Dadurch, dass die Spannungen U_{R1}, U_{S1}, U_{T1}, U_{R2}, U_{S2} und U_{T2} an den Eingängen der beiden generatorseitigen selbstgeführten Pulsstromrichter 38 und 40 beliebig zwischen Null und einer maximalen Zwischenkreisspannung U_{ZW} einstellbar sind, kann auch eine Differenzspannung U_{Br} jeweils zwischen einem Eingang des generatorseitigen selbstgeführten Pulsstromrichters 38 und einem korrespondieren Eingang des generatorseitigen selbstgeführten Pulsstromrichters 40 aufgebaut werden. Durch die so erzeugte Differenzspannung U_{Br} fließt jeweils ein Strom durch die Bremswiderstände 54.

Für die kontinuierliche Steuerung der an den Bremswiderständen 54 umgesetzten Leistungen gibt es verschiedene Verfahren. Wenn man davon ausgeht, dass jeder der Phasen R1, S1, T1, R2, S2 und T2 mittels einer Pulsweitenmodulation, insbesondere einer Sinus-Dreieck-Modulation, abgesteuert werden, so ergibt sich eine besonders einfache Realisierung zur Erzeugung eines Spannungs-Nullsystems. Durch eine Verschiebung einer Dreieckspannung U_{D1} bzw. U_{D2} des generatorseitigen selbstgeführten Pulsstromrichters 38 bzw. 40 in Bezug zur Dreieckspannung U_{D2} bzw. U_{D1} des generatorseitigen selbstgeführten Pulsstromrichters 40 bzw. 38 verschieben sich die Phasenspannungen U_{R1} bzw. U_{R2}, U_{S1} bzw. U_{S2} und U_{T1} bzw. U_{T2} zueinander, wodurch eine Differenzspannung U_{Br} über den jeweiligen Bremswiderstand 54 entsteht.

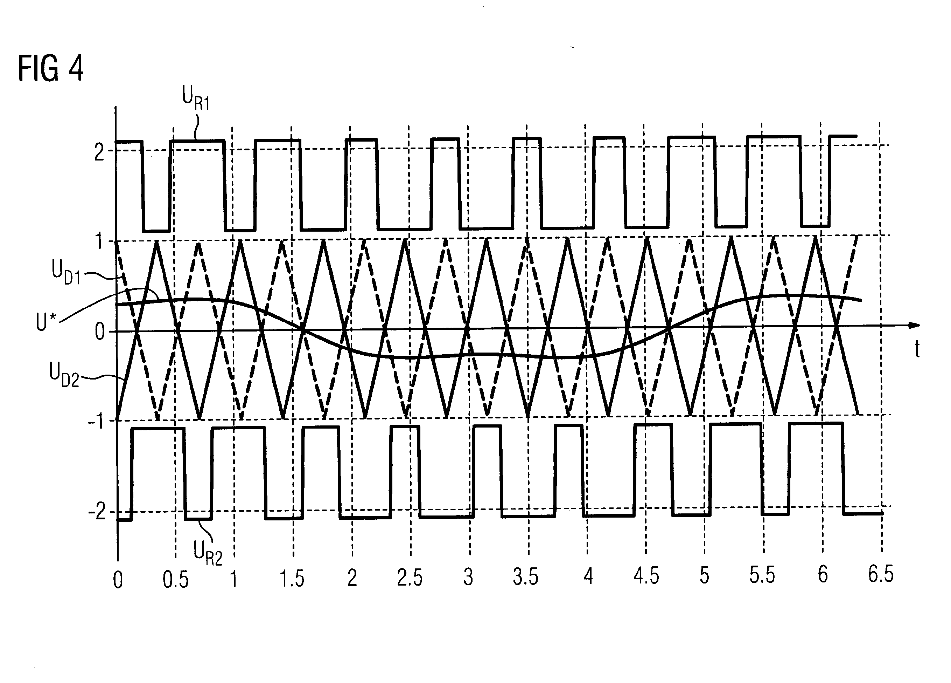

In der FIG 4 sind in einem Diagramm über der Zeit t jeweils eine Phasenspannung U_{R1} und U_{R2}, jeweils eine Dreieckspannung U_{D1} und U_{D2} und eine Sollspannung U^{*} dargestellt. Diesem Diagramm kann entnommen werden, dass die Dreieckspannung U_{D2} gegenüber der Dreieckspannung U_{D1} um 180° elektrisch phasenverschoben ist. Durch eine kontinuierliche Phasen-Verschiebung zwischen 0° und 180° el einer dieser Dreieckspannungen U_{D1} bzw. U_{D2} zur anderen Dreieckspannung U_{D2} bzw. U_{D1} kann kontinuierlich die Bremsleistung eingestellt werden.

Aus diesem Diagramm der FIG 4 ist ebenfalls erkennbar, dass zu jedem Zeitpunkt die Mittelwerte der Phasenspannungen U_{R1} und U_{R2} über eine Pulsperiode gleich ist. Das heißt, die Grundschwingung der pulsweitenmodulierten Phasenspannungen U_{R1} und U_{R2} folgt weiterhin der Sollspannung U^{*}. Somit ist der Generatorstrom bzw. dessen Drehmoment weiterhin regelbar, wobei gleichzeitig mittels der Generierung eines Spannungs-Nullsystems eine überschüssige Energie mittels der Bremswiderstände 54 in Wärme umgewandelt werden kann.

Neben der Phasenverschiebung einer Dreieckspannung U_{D1} bzw. U_{D2} gegenüber der anderen Dreieckspannung U_{D2} bzw. U_{D1} kann ein Spannungs-Nullsystem auch mittels einer Verschiebung des Taktverhältnisses der pulsweitenmodulierten Phasenspannungen U_{R1}, U_{S1} und U_{T1} des generatorseitigen selbstgeführten Pulsstromrichters 38 gegen die pulsweitenmodulierten Eingangsspannungen U_{R2}, U_{S2} und U_{T2} des generatorseitigen selbstgeführten Pulsstromrichters 40 erzeugt werden. Dazu wird in einem Teilsystem zur Sollspannung U^{*} eine der Bremsleistung proportionale Gleichspannung ΔU addiert, während für das anderer Teilsystem diese Gleichspannung ΔU abgezogen wird. Allen gemeinsam ist, dass ein Spannungs-Nullsystem generiert wird, das wegen der Symmetriebedingungen des freien Sternpunkts des Generators dabei in diesem keinen Strom anregt.

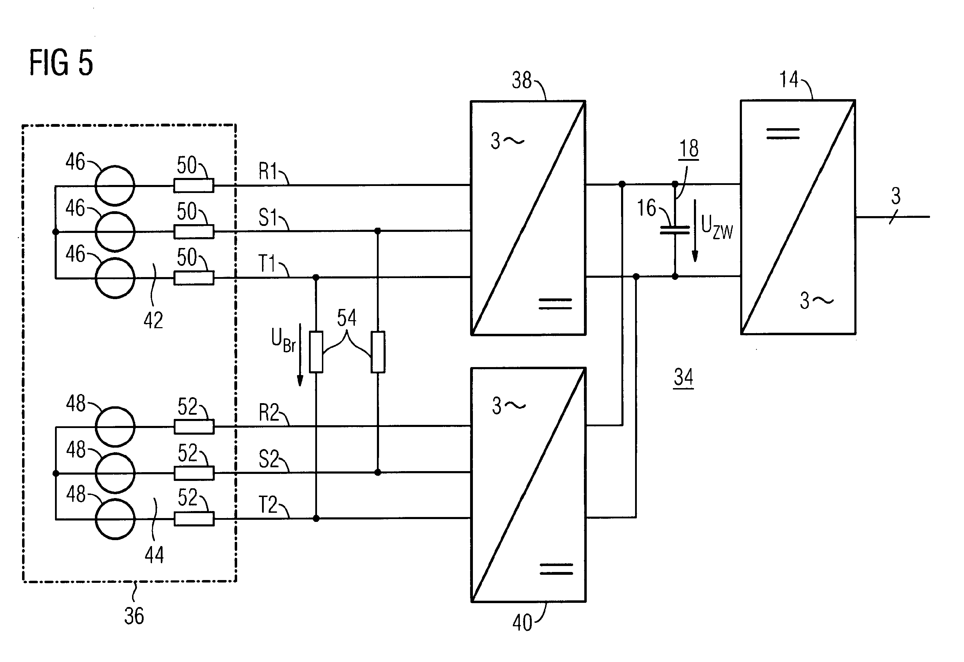

In der FIG 5 ist ein Ersatzschaltbild einer einfachen Ausführungsform der ersten Ausführung des dieselelektrischen Antriebssystems nach der Erfindung veranschaulicht. Diese einfache Ausführungsform unterscheidet sich von der vorteilhaften Ausführungsform gemäß FIG 3 dadurch, dass an Stelle von drei Bremswiderständen 54 nur zwei Bremswiderstände 54 oder aber nur einen Bremswiderstand 54 verwendet werden. Welche Eingangsphase R1 bzw. S1 bzw. T1 des ersten generatorseitigen selbstgeführten Pulsstromrichters 38 mit einer korrespondierenden Eingangsphase R2 bzw. S2 bzw. T2 des zweiten generatorseitigen selbstgeführten Pulsstromrichters 40 elektrisch leitend verbunden wird, ist unerheblich. In dem Ersatzschaltbild dieser FIG 5 ist die Eingangsphase T1 mit der korrespondierenden Eingangsphase T2 und die Eingangsphase S1 mit der korrespondierenden Eingangsphase S2 jeweils mittels eines Bremswiderstandes 54 elektrisch leitend verbunden. Da bei dieser einfachen Ausführungsform der ersten Ausführung des dieselelektrischen Antriebssystems nur zwei Bremswiderstände 54 verwendet werden, kann auch nur 2/3 der in der Ausführungsform der FIG 3 anfallenden Bremsleistung in Wärme umgesetzt werden. Wird nur ein Bremswiderstand 54 verwendet, so kann gegenüber der Ausführungsform nach Fig. 3 nur 1/3 der anfallenden Bremsleistung in Wärme ungesetzt werden.

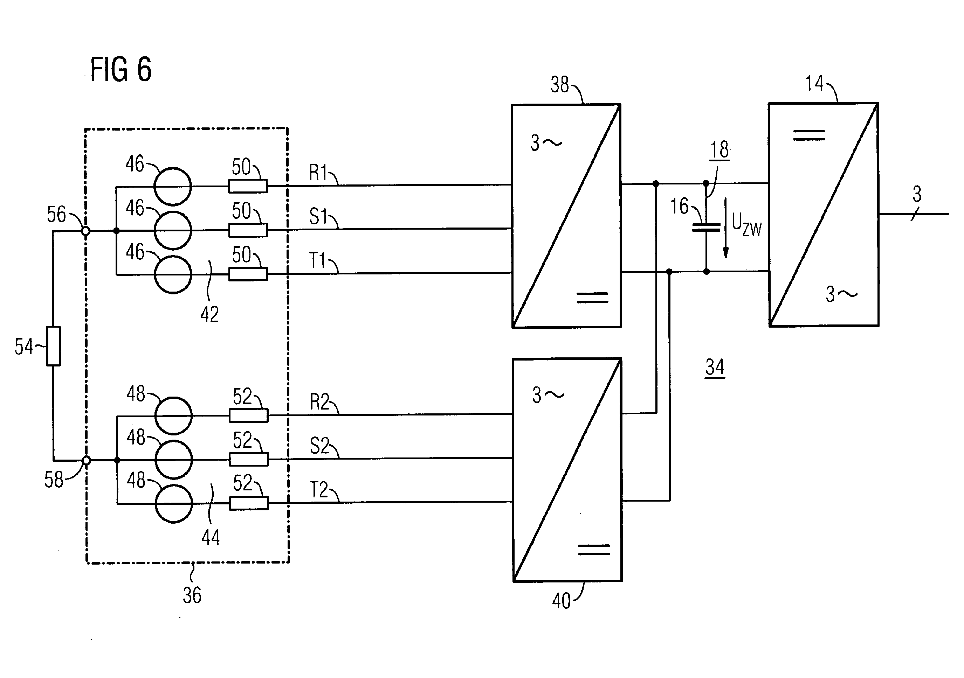

Weisen die beiden mehrphasigen Wicklungssysteme 42 und 44 des Generators 36 jeweils einen herausgeführten Sternpunkt 54 und 56 auf (FIG 6), so kann der eine Bremswiderstand 54 an Stelle an einer Eingangsphase R1 bzw. S1 bzw. T1 und einer korrespondierenden Eingangsphase R2 bzw. S2 bzw. T2 an diese beiden Sternpunkte 54 und 56 angeschlossen werden. Dadurch verändert sich nicht die Funktionsweise des erfindungsgemäßen dieselelektrischen Antriebssystems gemäß der Ausführungsform nach FIG 5.

Wesentliches Merkmal des erfindungsgemäßen dieselelektrischen Antriebssystems ist die Verbindung zwischen zwei dreiphasigen Spannungssystemen über Bremswiderständen 54. Gegenüber dem gattungsgemäßen dieselelektrischen Antriebssystems gemäß FIG 1 sind beim erfindungsgemäßen dieselelektrischen Antriebssystem der IGBT-Gleichrichter und der Bremssteller funktionell vereint. Wo bisher im Fahr- und Bremsbetrieb jeweils einer der beiden ungenutzt war, kann beim erfindungsgemäßen dieselelektrischen Antriebssystem im Fahr- und Bremsbetrieb beide Stromrichter gleichzeitig genutzt werden. Durch die funktionelle Integration beider Stromrichter in zwei generatorseitige selbstgeführte Pulsstromrichter 38 und 40 hat sich nicht nur der Leistungshalbleiteraufwand halbiert, sondern ebenfalls die Kosten.

## Patentansprüche

1. Dieselelektrisches Antriebssystem mit einem Generator (4), der läuferseitig mit einem Dieselmotor (2) mechanisch gekoppelt ist und ständerseitig mit einem Spannungszwischenkreis-Umrichter (6) mit einem generator- und lastseitigen selbstgeführten Pulsstromrichter (12, 14) und mit einem Bremswiderstand (20), **dadurch gekennzeichnet, dass** als Generator (4) ein Generator (36) mit zwei mehrphasigen Wicklungssystemen (42, 44) vorgesehen ist, die jeweils mit einem generatorseitigen selbstgeführten Pulsstromrichter (38, 40) elektrisch leitend verbunden sind, wobei der zweite generatorseitige selbstgeführte Pulsstromrichter (40) gleichspannungsseitig elektrisch parallel zum Spannungs-Zwischenkreis (18) des Spannungszwischenkreis-Umrichters (34) geschaltet ist, und dass wenigstens eine Eingangsphase (R1, S1, T1) des ersten generatorseitigen selbstgeführten Pulsstromrichters (38) mittels eines Bremswiderstandes (54) mit einer korrespondierenden Eingangsphase (R2, S2, T2) des zweiten generatorseitigen selbstgeführten Pulsstromrichters (40) elektrisch leitend verbunden ist.

2. Dieselelektrisches Antriebssystem mit einem Generator (4), der läuferseitig mit einem Dieselmotor (2) mechanisch gekoppelt ist und ständerseitig mit einem Spannungszwischenkreis-Umrichter (6) mit einem generator- und lastseitigen selbstgeführten Pulsstromrichter (12, 14) und mit einem Bremswiderstand (20), **dadurch gekennzeichnet, dass** als Generator (4) ein Generator (36) mit zwei mehrphasigen Wicklungssystemen (42, 44) vorgesehen ist, die jeweils mit einem generatorseitigen selbstgeführten Pulsstromrichter (38, 40) elektrisch leitend verbunden sind, wobei der zweite generatorseitige selbstgeführte Pulsstromrichter (40) gleichspannungsseitig elektrisch parallel zum Spannungs-Zwischenkreis (18) des Spannungszwischenkreis-Umrichters (34) geschaltet ist, und dass ein Bremswiderstand (54) mit den herausgeführten Sternpunkten (54, 56) der beiden mehrphasigen Wicklungssysteme (42, 44) verknüpft ist.

3. Dieselelektrisches Antriebssystem nach Anspruch 1, **dadurch gekennzeichnet, dass** jede Eingangsphase (R1, S1, T1) des ersten generatorseitigen selbstgeführten Pulsstromrichters (38) mittels eines Bremswiderstandes (54) mit einer korrespondierenden Eingangsphase (R2, S2, T2) des zweiten generatorseitigen selbstgeführten Pulsstromrichters (40) elektrisch leitend verbunden ist.

4. Dieselelektrisches Antriebssystem nach Anspruch 1 oder 2, **dadurch gekennzeichnet, dass** als Generator (36) ein permanenterregter Synchrongenerator (4) vorgesehen ist.

5. Dieselelektrisches Antriebssystem nach Anspruch 1 oder 2, **dadurch gekennzeichnet, dass** als Generator (36) ein fremderregter Synchrongenerator vorgesehen ist.

6. Dieselelektrisches Antriebssystem nach Anspruch 1 oder 2, **dadurch gekennzeichnet, dass** als Generator (36) ein Asynchrongenerator vorgesehen ist.

7. Verfahren zum Fahrbetrieb des dieselelektrischen Antriebssystems nach Anspruch 1 oder 2, **dadurch gekennzeichnet, dass** die beiden generatorseitigen selbstgeführten Pulsstromrichter (38, 40) des Spannungszwischenkreis-Umrichters (34) gleichphasig getaktet werden.

8. Verfahren zum Bremsbetrieb des dieselelektrischen Antriebssystems nach Anspruch 1 oder 2, **dadurch gekennzeichnet, dass** die beiden generatorseitigen selbstgeführten Pulsstromrichter (38, 40) des Spannungszwischenkreis-Umrichters (34) derart gesteuert werden, dass ein Spannungs-Nullsystem erzeugt wird.

9. Verfahren zum Bremsbetrieb nach Anspruch 8, **dadurch gekennzeichnet, dass** ein Taktsignal (U_{D1}, U_{D2}) einer Pulsweitenmodulation der beiden generatorseitigen selbstgeführten Pulsstromrichter (38, 40) zum anderen um einen vorbestimmten Wert zeitlich verschoben ist.

10. Verfahren zum Bremsbetrieb nach Anspruch 8, **dadurch gekennzeichnet, dass** die Taktverhältnisse der beiden generatorseitigen selbstgeführten Pulsstromrichter (38, 40) um einen vorbestimmten Wert zueinander verschoben sind.

## Claims

1. Diesel-electric drive system having a generator (4) which is mechanically coupled on the rotor side to a diesel engine (2) and is mechanically coupled on the stator side to a voltage intermediate-circuit converter (6) with a generator-side and load-side self-commutated pulse-controlled converter (12, 14) and with a braking resistor (20), **characterized in that** a generator (36) with two polyphase winding systems (42, 44) is provided as the generator (4), which winding systems are respectively electrically conductively connected to a generator-side self-commutated pulse-controlled converter (38, 40), wherein the second generator-side self-commutated pulse-controlled converter (40) is connected on the DC voltage side electrically in parallel with the voltage intermediate circuit (18) of the voltage intermediate-circuit converter (34), and **in that** at least one input phase (R1, S1, T1) of the first generator-side, self-commutated pulse-controlled converter (38) is electrically conductively connected by means of a braking resistor (54) to a corresponding input phase (R2, S2, T2) of the second generator-side self-commutated pulse-controlled converter (40).

2. Diesel-electric drive system having a generator (4) which is mechanically coupled on the rotor side to a diesel engine (2) and is mechanically coupled on the stator side to a voltage intermediate-circuit converter (6) with a generator-side and load-side self-commutated pulse-controlled converter (12, 14) and with a braking resistor (20), **characterized in that** a generator (36) with two polyphase winding systems (42, 44) is provided as the generator (4), which winding systems are respectively electrically conductively connected to a generator-side self-commutated pulse-controlled converter (38, 40), wherein the second generator-side self-commutated pulse-controlled converter (40) is connected on the DC voltage side electrically in parallel with the voltage intermediate circuit (18) of the voltage intermediate-circuit converter (34), and **in that** a braking resistor (54) is linked to the passed-out star points (54, 56) of the two polyphase winding systems (42, 44).

3. Diesel-electric drive system according to Claim 1, **characterized in that** each input phase (R1, S1, T1) of the first generator-side self-commutated pulse-controlled converter (38) is electrically conductively connected by means of a braking resistor (54) to a corresponding input phase (R2, S2, T2) of the second generator-side self-commutated pulse-controlled converter (40).

4. Diesel-electric drive system according to Claim 1 or 2, **characterized in that** a permanent-magnet synchronous generator (4) is provided as the generator (36).

5. Diesel-electric drive system according to Claim 1 or 2, **characterized in that** an externally excited synchronous generator is provided as the generator (36).

6. Diesel-electric drive system according to Claim 1 or 2, **characterized in that** an asynchronous generator is provided as the generator (36).

7. Method for traction mode of the diesel-electric drive system according to Claim 1 or 2, **characterized in that** the two generator-side self-commutated pulse-controlled converters (38, 40) of the voltage intermediate-circuit converter (34) are clocked in phase.

8. Method for braking operation of the diesel-electric drive system according to Claim 1 or 2, **characterized in that** the two generator-side self-commutated pulse-controlled converters (38, 40) of the voltage intermediate-circuit converter (34) are controlled such that a voltage zero phase-sequence system is produced.

9. Method for braking operation according to Claim 8, **characterized in that** a clock signal (U_{D1}, U_{D2}) of one pulse-width modulation of the two generator-side self-commutated pulse-controlled converters (38, 40) is shifted through a predetermined value in time with respect to the other.

10. Method for braking operation according to Claim 8, **characterized in that** the duty ratios of the two generator-side self-commutated pulse-controlled converters (38, 40) are shifted through a predetermined value with respect to one another.

## Revendications

1. Système d'entraînement diesel-électrique, comprenant une génératrice ( 4 ) qui est couplée mécaniquement à un moteur ( 2 ) diesel du côté du rotor et, du côté du stator, à un convertisseur ( 6 ) de circuit intermédiaire de tension, un redresseur ( 12, 14 ) pulsé à commutation automatique du côté de la génératrice et de la charge et une résistance ( 20 ) de freinage, **caractérisé en ce qu'**il est prévu comme génératrice ( 4 ) une génératrice ( 36 ) ayant deux systèmes ( 42, 44 ) d'enroulement polyphasé, qui sont reliés d'une manière conductrice de l'électricité respectivement à un redresseur ( 38, 40 ) pulsé à commutation automatique du côté de la génératrice, dans lequel le deuxième redresseur ( 40 ) pulsé à commutation automatique du côté de la génératrice est monté, du côté de la tension continue, électriquement en parallèle au circuit intermédiaire ( 18 ) de tension du convertisseur ( 34 ) de circuit intermédiaire de tension, et **en ce que** au moins une phase ( R1, S1, T1 ) d'entrée du premier redresseur ( 38 ) pulsé à commutation automatique du côté de la génératrice est relié d'une manière conductrice de l'électricité au moyen d'une résistance ( 54 ) de freinage, à une phase ( R2, S2, T2 ) d'entrée correspondante du deuxième redresseur ( 40 ) pulsé à commutation automatique du côté de la génératrice.

2. Système d'entraînement diesel-électrique, comprenant une génératrice ( 4 ) qui est couplée mécaniquement à un moteur ( 2 ) diesel du côté du rotor et, du côté du stator, à un convertisseur ( 6 ) de circuit intermédiaire de tension, un redresseur ( 12, 14 ) pulsé à commutation automatique du côté de la génératrice et de la charge et une résistance ( 20 ) de freinage, **caractérisé en ce qu'**il est prévu comme génératrice ( 4 ) une génératrice ( 36 ) ayant deux systèmes ( 42, 44 ) d'enroulement polyphasé, qui sont reliés d'une manière conductrice de l'électricité respectivement à un redresseur ( 38, 40 ) pulsé à commutation automatique du côté de la génératrice, dans lequel le deuxième redresseur ( 40 ) pulsé à commutation automatique du côté de la génératrice est monté, du côté de la tension continue, électriquement en parallèle au circuit intermédiaire ( 18 ) de tension du convertisseur ( 34 ) du circuit intermédiaire de tension et **en ce qu'**une résistance ( 54 ) de freinage est combinée aux points étoiles ( 54, 56 ) qui en sortent des deux systèmes ( 42, 44 ) d'enroulement polyphasés.

3. Système d'entraînement diesel-électrique suivant la revendication 1, **caractérisé en ce que** chaque phase ( R1, S1, T1 ) d'entrée du premier redresseur ( 38 ) pulsé à commutation automatique du côté de la génératrice est reliée d'une manière conductrice de l'électricité, au moyen d'une résistance ( 54 ) de freinage, à une phase ( R2, S2, T2 ) d'entrée correspondante du deuxième redresseur ( 40 ) pulsée à commutation automatique du côté de la génératrice.

4. Système d'entraînement diesel-électrique suivant la revendication 1 ou 2, **caractérisé en ce qu'**il est prévu comme génératrice ( 36 ) un alternateur ( 4 ) synchrone à excitation permanente.

5. Système d'entraînement diesel-électrique suivant la revendication 1 ou 2, **caractérisé en ce qu'**il est prévu comme génératrice ( 36 ) un alternateur synchrone à excitation indépendante.

6. Système d'entraînement diesel-électrique suivant la revendication 1 ou 2, **caractérisé en ce qu'**il est prévu comme génératrice ( 36 ) un alternateur asynchrone.

7. Procédé pour faire fonctionner un moteur le système d'entraînement diesel-électrique suivant la revendication 1 ou 2, **caractérisé en ce que** l'on fait fonctionner en même phase les deux redresseurs ( 38, 40 ) pulsés à commutation automatique du côté de la génératrice du convertisseur ( 34 ) du circuit intermédiaire de tension.

8. Procédé pour faire fonctionner en frein le système d'entraînement diesel-électrique suivant la revendication 1 ou 2, **caractérisé en ce que** l'on commande les deux redresseurs ( 38, 40 ) pulsés à commutation automatique du côté de la génératrice du convertisseur ( 34 ) du circuit intermédiaire de tension de façon à produire un système nul de tension.

9. Procédé pour le fonctionnement en frein, suivant la revendication 8, **caractérisé en ce que** l'on décale dans le temps, d'une valeur déterminée à l'avance, un signal ( UD1, UD2 ) d'horloge d'une modulation en largeur d'impulsion des deux redresseurs ( 38, 40 ) pulsés à commutation automatique du côté de la génératrice l'un par rapport à l'autre.

10. Procédé pour le fonctionnement en frein, suivant la revendication 8, **caractérisé en ce que** l'on décale, d'une valeur déterminée à l'avance, l'un par rapport à l'autre, les rapports de cycle des deux redresseurs ( 38, 40 ) pulsés à commutation automatique du côté de la génératrice.
